# EUROPÄISCHE PATENTSCHRIFT

(11) **EP 2 528 107 B1**
(45) Veröffentlichungstag und Bekanntmachung des Hinweises auf die Patenterteilung: **12.08.2015**
(21) Anmeldenummer: 12163020.6
(22) Anmeldetag: 03.04.2012
(51) Int. Cl.: H01L 31/048

(54) **Fassadenelement**
Facade element
Elément de façade

(30) Priorität: 24.05.2011 EP 11167323
(43) Veröffentlichungstag der Anmeldung: 28.11.2012
(73) Patentinhaber: Gehrmann, Klaus, 06237 Leuna (DE)
(72) Erfinder: Gehrmann, Klaus, 06237 Leuna (DE)
(74) Vertreter: Lohr, Georg

(56) Entgegenhaltungen:
- DE-U1-202008 014 320
- DE-U1-202010 012 559

## Beschreibung

### Technisches Gebiet

Die Erfindung betrifft ein Fassadenelement zum Bau von Gebäudefassaden mit wenigstens einem Photovoltaikmodul. Das Photovoltaikmodul hat zumindest eine Frontplatte und eine rückwärtige Trägerplatte, wobei die Frontplatte das Fassadenelement nach vorne abschließt.

### Stand der Technik

Photovoltaikmodule dienen zur Umwandlung von Licht in elektrische Energie und nutzen dazu den photovoltaischen Effekt. Ein typisches Photovoltaikmodul besteht aus einer Vielzahl photovoltaischer Zellen, die zwischen einer Trägerplatte und einer transparenten Frontplatte angeordnet sind.

Photovoltaikmodule werden unter anderem an Gebäuden angebracht. Die Photovoltaikmodule können beispielsweise an Wänden und/oder Dachflächen befestigt werden und dadurch die Fassade der entsprechenden Gebäudefläche bilden. Dazu werden die Photovoltaikmodule meist an Tragkonstruktionen, die auf der Außenhülle des Gebäudes angebracht werden, montiert. Die Außenhülle schützt das Gebäude vor Nässe und ist in der Regel Teil der Wärmeisolierung des Gebäudes.

Die FR 2 846 022 beschreibt ein Fassadenelement mit einer durchsichtigen Frontplatte und einer rückseitigen Isolierung. Zwischen der Isolierung und der Frontplatte ist ein mit der Umgebung kommunizierender Hohlraum zur Hinterlüftung der Isolierung und zur Aufnahme von Kollektoren einer thermischen Solaranlage.

DE 20 2008 014320 U1 beschreibt ein Bauelement für Gebäude mit einem frontseitigen Photovoltaikelement. Das Photovoltaikelement sitzt auf der sonnenzugewandten Seite eines ersten Betonelements. Im Inneren des ersten Betonelements sind Leitungen für ein Wärmeträgermedium eingebettet. Durch dieses Medium kann zum einen das Photovoltaikelement gekühlt werden und zum anderen die dabei abgeführte Wärme technisch genutzt werden. An der unteren Seite des ersten Betonelements sitzt dieses auf Balken, die auf einer Betonplatte aufliegen. Zwischen dem Betonelement und der Betonplatte ist ein Hohlraum, der mit einem Dämmstoff verfüllt ist. Durch die Betonplatte und das Betonelement kann das Bauelement statische Funktionen des Gebäudes übernehmen.

DE 20 2010 012 559 U1 beschreibt ein Solarmodul für ein Umkehrdach, bei dem die Entwässerungsebene unterhalb der Isolierung angeordnet ist. Das Solarmodul hat eine Dämmplatte mit Befestigungselementen um beabstandet von der Dämmplatte ein Photovoltaikmodul an der Dämmplatte zu befestigen. Zur Montage des Umkehrdachs wird zunächst die Wasserabdichtung auf die Tragschicht aufgebracht. Dann werden die Dämmplatten auf das Dach aufgelegt und mit einer losen Kiesschüttung oder Betonplatten beschwert. Oberhalb der Kies- oder Betonschicht werden dann die Photovoltaikmodule an den Befestigungselementen befestigt, wobei ein Hinterlüftungsspalt zwischen dem Kies- bzw. Beton und der Rückseite der Photovoltaikmodule verbleibt. Die Kiesschüttung bzw. die Betonplatten verhindern, dass die Solarmodule durch Windsog abgehoben werden.

WO 2011/086325 beschreibt eine Bedachung aus wasserdicht aneinandergesetzten Photovoltaikmodulen. Die ansonsten übliche Dacheindeckung zur Abdichtung des Daches gegen Wasser kann somit entfallen.

EP 1873 843 A2 beschreibt ein Photovoltaikmodul aus einer durchsichtigen Frontplatte und einer dahinter angeordneten Trägerplatte. Zwischen der Trägerplatte und der Frontplatte sind Solarzellen, die auch als photovoltaische Zellen bezeichnet werden angeordnet. Auf der Rückseite der Trägerplatte ist eine wärmeleitende Schicht auf der flächig an dieser anliegende ovale Rohre angeordnet sind. Durch Rohre wird ein Wärmeträgerfluid geleitet, um die Solarzellen zu kühlen. Die Rohre sind in eine auf der Rückseite der Trägerplatte angeordnete Isolationsschicht eingebettet. Die genannten Komponenten, also Frontplatte, Trägerplatte, die wärmeleitende Schicht und die Isolationsschicht werden durch einen die Schmalseite bildenden und die Komponenten umgreifenden Rahmen zusammengehalten. An dem Rahmen wird das Photovoltaikmodul wie üblich aufgeständert.

### Darstellung der Erfindung

Die Erfindung beruht auf der Beobachtung, dass Photovoltaikmodule zunehmend auch als gestalterische Elemente insbesondere bei Neubauten in deren Fassade integriert werden.

Der Erfindung liegt die Aufgabe zugrunde, den Vorfertigungsgrad der Bauelemente zu erhöhen, um somit die eigentliche Bauzeit zu verkürzen.

Diese Aufgabe wird durch ein Fassadenelement nach Anspruch 1 gelöst. Vorteilhafte Ausgestaltungen der Erfindung sind in den Unteransprüchen angegeben.

Das Fassadenelement hat wenigstens ein Photovoltaikmodul, das zumindest eine Frontplatte und eine rückwärtige Trägerplatte aufweist, wobei die Frontplatte die Frontseite des Fassadenelementes bildet. Das Photovoltaikmodul kann z.B. ein sogenanntes Dünnschichtmodul sein. Auf der Rückseite der Trägerplatte ist bevorzugt mindestens ein Abstandhalter aufgesetzt, an dessen Rückseite eine Abdeckung, die auch als Deckschicht bezeichnet wird, angeordnet ist. Zwischen der Rückseite der Trägerplatte und der Deckschicht ist somit ein zumindest im Wesentlichen geschlossener Raum. Dieser Raum ist mit wenigstens einem Dämmstoff verfüllt. Die nach dem Stand der Technik notwendige Hinterlüftung des Photovoltaikmoduls entfällt. Dadurch kann ein wesentlich steiferes und günstigeres Fassadenelement geschaffen werden, welches das Gebäude abdichtet, z. B. gegen Kälte, Wärme und/oder Schall isoliert sowie elektrischen Strom liefert. Das Fassadenelement übernimmt somit mehrere Aufgaben: die Wärme-und Schallisolierung, die Abdichtung des Baukörpers gegen Wasser und Wind sowie die Erzeugung von elektrischer Energie. Zusammen mit den Randbereichen des Photovoltaikmoduls und der Deckschicht bildet der wenigstens eine Abstandhalter einen Randverbund, der bevorzugt orthogonal auf die Frontplate und die Deckschicht wirkende Einspannkräfte zur Fixierung des Fassadenelementes aufnehmen kann.

Bevorzugt bildet der Abstandhalter einen bevorzugt umlaufenden Rahmen, der zwischen der Trägerplatte und der Deckschicht angeordnet ist und den Raum zwischen der Deckschicht und der Trägerplatte zumindest stückweise seitlich begrenzt. Dadurch wird das Fassadenelement besonders belastbar, und durch den innenliegenden Abstandhalter kann die Frontplatte das einzige, die Frontansicht bestimmende Element sein. Es ist somit beispielsweise ein Fassadenelement mit einer Frontseite möglich, die auch im Randbereich plan ist.

Bevorzugt ist der Abstandhalter als Isolierstoffstütze ausgebildet. Dadurch werden Kältebrücken, die zur Bildung von Kondenswasser und damit langfristig zu Schäden am Baukörper führen können vermieden.

Der Randverbund trägt zur thermischen Isolation zwischen dem Photovoltaikmodul und der Deckschicht bei und kann die Einspannkräfte, die bei der Montage des Photovoltaikmoduls auftreten, aufnehmen.

Bevorzugt ist der Abstandhalter aus einem Kunststoff, z.B. aus einem Kunststoffprofil. Das Profil ist bevorzugt ein Hohlprofil, um die Wärmedämmung zu verbessern. Natürlich kann der Abstandhalter auch aus einem anderen Material, z.B. Metall sein, obgleich dieses den Nachteil hat, dass die meisten Metalle gute Wärmeleiter sind. Ebenso ist ein Abstandhalter aus einem Kompositematerial möglich, wodurch eine besonders gute Kombination aus statischer Belastbarkeit und geringerem Wärmedurchgangskoeffizienten möglich wird.

In einer Ausführungsform ist der Abstandhalter gegenüber dem Rand der Trägerplatte und/oder der Deckschicht zurückgesetzt. Dadurch bilden die überstehenden Ränder eine Randfuge, deren Tiefe durch den Abstandhalter begrenzt ist. Diese Randfuge ist bevorzugt mit einem Dichtmittel, z.B. einer Vergussmasse wie einem PUR-Kleber, zumindest partiell verfüllt und dann Teil des Randverbunds. Dadurch können die Schmalseiten des Fassadenelements einfach, zuverlässig und dauerhaft abgedichtet werden. Das Dichtmittel kann zudem als Klebstoff wirken, der das Photovoltaikmodul, den Abstandhalter und die Deckschicht dauerhaft miteinander verbindet. Ein weitere Vorteil besteht darin, dass solche Fassadenelemente bündig nebeneinander angeordnet werden können und dabei eine meist plane, nur durch die Frontplatte bestimmte Oberfläche entsteht, denn der nach dem Stand der Technik übliche, das Photovoltaikmodul umgreifende Befestigungsrahmen kann entfallen. Deshalb sind beispielsweise durchgängige blaue (Si-Solarzellen) oder auch schwarze (CdTe-Solarzellen) Streifen in einer Fassade realisierbar, die aus mehreren Fassadenelementen zusammengesetzt sind.

Bevorzugt liegt der Dämmstoff an der Rückseite der Trägerplatte und/oder an der Deckschicht zumindest abschnittsweise bevorzugt haftend an. Beispielsweise kann ein Dämmstoff, wie z.B. wenigstens eine Dämmstoffplatte, bevorzugt flächig an der Trägerplatte und/oder der Deckschicht anliegen. Besonders bevorzugt haftet der Dämmstoff durchgängig an der Trägerplatte und/oder an der Deckschicht. Dadurch wird die Verwindungssteifigkeit des Fassadenelementes erhöht. Es kann dann höhere Sog- und Druckkräfte aufnehmen.

Anschlusskabel für das Photovoltaikmodul können durch wenigstens eine Ausnehmung im Randverbund, z.B. im Abstandhalter, an wenigstens einer Schmalseite des Fassadenelements aus diesem herausgeführt werden. Das erlaubt eine einfache Montage des Fassadenelements, weil das Fassadenelement zunächst statisch befestigt und anschließend auch elektrisch angeschlossen werden kann, denn die Rückseite des Fassadenelemente ist in der Regel nach dessen Montage an der Fassade oder auf dem Dach eines Baukörpers nicht mehr zugänglich. Zudem kann die Ausnehmung ggf. zusammen mit der Randfuge durch ein Dichtmittel in einem Arbeitsgang abgedichtet werden.

Besonders einfach ist der elektrische Anschluss des Fassadenelements, wenn im Randverbund wenigstens eine Anschlussdose für das Photovoltaikmodul integriert ist. Besonders bevorzugt weist die Anschlussdose einen Terminal für wenigsten einen Steckverbinder auf, auch das vereinfacht die Montage. Die Anschlussdose kann Teil des Abstandhalters sein, bzw. als ein solcher wirken.

Bevorzugt hat das Fassadenelement keinen seine Schmalseite(n) umfassenden Befestigungsrahmen, es ist also bevorzugt in diesem Sinne rahmenlos. Dadurch wird die Abdichtung der Verbindung zwischen dem Baukörper und dem Fassadenelement vereinfacht, weil die ansonsten beim Einspannen des Rahmens regelmäßig auftretenden Leckagen ausgeschlossen sind.

Bevorzugt ist die Dicke des Fassadenelements zumindest an zwei gegenüberliegenden Randbereichen des Fassadenelementes bevorzugt gestuft verjüngt. Auch dies vereinfacht die Montage des Fassadenelements, denn der Randbereich ist durch die reduzierte Dicke wesentlich steifer und somit zuverlässiger einzuspannen. Der dickere Bereich zwischen den gestuft verjüngten Bereichen kann in Auspaarungen zwischen statischen Elementen des Baukörpers, z.B. zwischen Dachsparren oder in Aussparungen einer Pfosten -Riegel Fassade eingreifen und somit die Wärmedämmung verbessern.

Die zuvor beschriebenen Fassadenelemente können grundsätzlich an nahezu beliebiger Stelle eines Baukörpers angeordnet werden: Beispielsweise können die Fassadenelemente an einer Wand eines Baukörpers befestigt sein. Besonders geeignet sind dafür Pfosten-Riegel Fassaden. Ebenso können die Fassadenelemente als Dachpanele auf einem Dach, z.B. auf Dachsparren befestigt werden.

Bevorzugt wird das Fassadenelement durch flächiges Einspannen von wenigstens zwei gegenüberliegenden Randbereichen mit dem Baukörper verbunden. Das ist statisch stabil, entsprechende Klemmprofile sind einfach zu realisieren und erlauben mit der Klemmung eine wasserdichte Befestigung des Fassadenelements. Die nach dem Stand der Technik notwendigen Unterkonstruktionen zur Hinterlüftung der Photovoltaikmodule können entfallen.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt ein Fassadenelement,
Figur 2 zeigt das Fassadenelement in einer Einbausituation auf zwei Dachsparren,

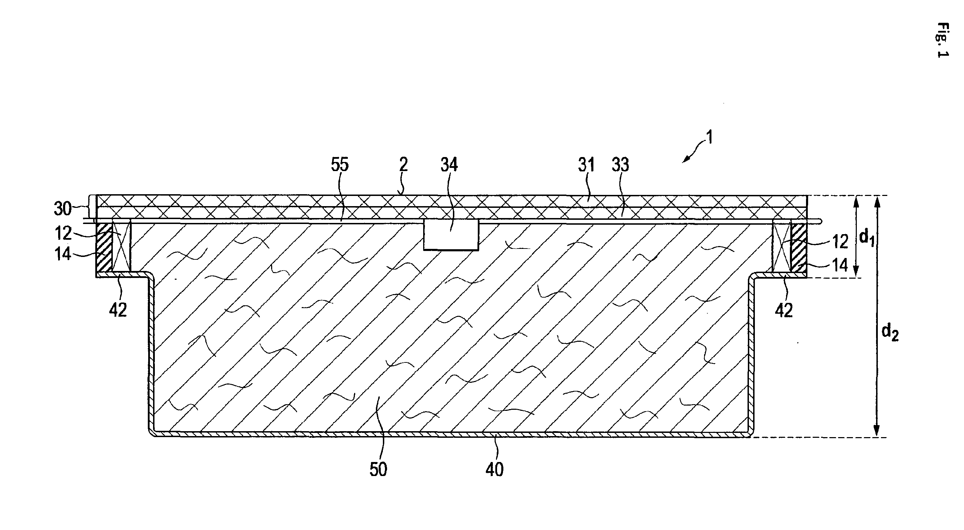

Figur 1 zeigt ein Fassadenelement 1, im Querschnitt. Das Fassadenelement 1 hat frontseitig ein Photovoltaikmodul 30 mit einer hier untenliegenden Trägerplatte 33, die auch als Rückplatte 33 bezeichnet werden kann, und einer davor angeordneten Frontplatte 31. Zwischen der Front- und der Rückplatte sind hier nur als Linie angedeuteten Solarzellen angeordnet. Auf den Randbereich der Rückplatte 33 ist ein Abstandhalter 12 aufgesetzt. An der Rückseite des Abstandhalters 12 wiederum liegt eine Deckschicht 40 als Abdeckung auf. Die Randbereiche des Photovoltaikmoduls 30 und die Randbereiche 42 der Deckschicht 40 überlappen den Abstandhalter 12 seitlich, wodurch eine Randfuge gebildet wird, die mit einer bevorzugt dauerelastischen Masse versiegelt ist

Der Raum zwischen der Deckschicht40 und dem Photovoltaikmodul 30 ist mit einem Dämmstoff 50 gefüllt. Der Dämmstoff 50 dient der Wärme und/oder Schallisolation des Baukörpers. Beispielsweise kann der Raum mit einem Dämmstoff wie Polyurethan ausgeschäumt sein. Bevorzugt werden haftende (adhäsive) Schäume verwendet, die an dem Abstandhalter 12 und/oder dem Photovoltaikmodul 30 und/oder der Deckschicht 40 haften, wodurch das Fassadenelement versteift und die Schall- und auch Wärmeisolierung verbessert wird. Solche Schäume können beispielsweise mit einer Lanze durch eine Ausnehmung des Abstandhalters 12 in den Raum eingebracht werden. Anschließend wird die Ausnehmung bevorzugt versiegelt. Dies kann in einem Arbeitsgang mit der Versiegelung der Randfuge erfolgen. Im gezeigten Beispiel ist in an der der Deckschicht 40 zugewandten Rückseite des Photovoltaikmoduls 30 die übliche Anschlussdose 34. Zum Anschluss des Photovoltaikmoduls sind entsprechende Anschlusskabel 55 seitlich durch Ausnehmungen in dem Randverbund herausgeführt.

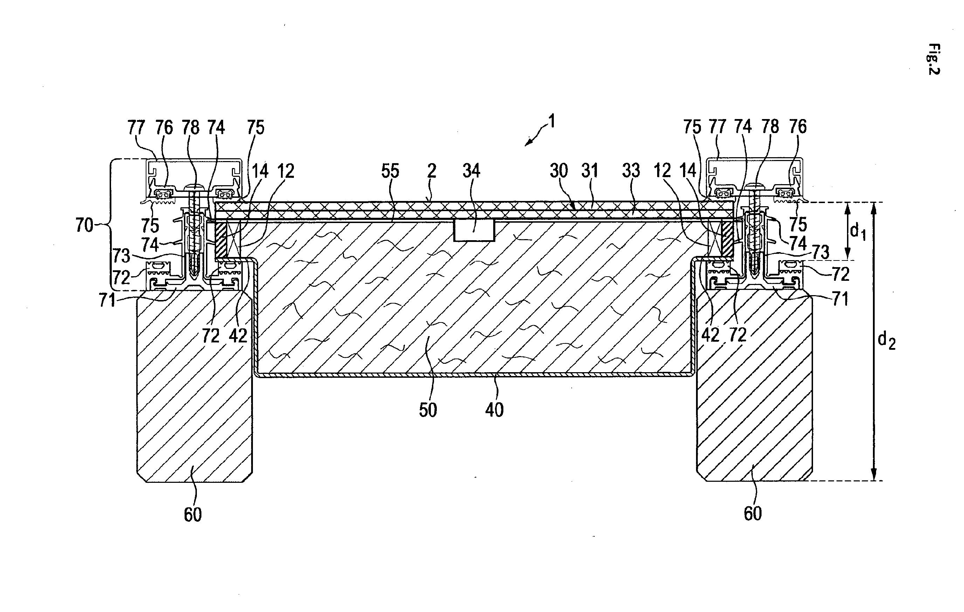

Das Fassadenelement 1 ist in der Dicke zumindest zu den beiden gezeigten Randbereichen gestuft verjüngt. Es hat also einen mittleren Abschnitt mit einer Dicke d₂ und zumindest beidseits des mittleren Abschnitts eine Dicke d_{1.}, mit d₁<d₂. Dazu ist die Deckschicht 40 zumindest im Querschnitt wannenförmig ausgeführt, wobei der Randbereich 42 der Wanne zumindest in etwa parallel zu der zumindest im Wesentlichen planen Rückseite des Photovoltaikmoduls 30 abgewinkelt ist. Alternativ kann das Fassadenelement auch einen um den mittleren Abschnitt umlaufenden verjüngten Abschnitt aufweisen. Der mittlere Abschnitt kann in eine Aussparung zwischen Konstruktionselementen des Baukörpers eingreifen, z.B. in einen Zwischenraum zwischen zwei Dachsparren. Dadurch kann der Wärmedurchgangskoeffizient der Gebäudehülle weiter reduziert werden. Figur 2 zeigt das Fassadenelement 1 in einer Einbausituation auf zwei Dachsparren 60. Auf den Dachsparren 60 ist eine Einspannvorrichtung 70 angeordnet. Diese spannt den Randbereich des Fassadenelements ein. Zwischen den abgewinkelten Randbereichen 42, der Deckschicht 40 und dem Photovoltaikmodul ist der Abstandhalter 12 angeordnet, so dass er die von der angedeuteten Einspannvorrichtung 70 eingebrachte Spannkraft abfängt. Die Einspannvorrichtung 70 hat ein im Querschnitt näherungsweise T-förmiges unteres Profil 71, wobei der Querschenkel des "T" auf dem Dachsparren 60 aufliegt und mit ihm verbunden, beispielsweise verschraubt ist. Auf das untere Profil 71 ist ein Aufsatz 73 aus einem dauerelastischen Material aufgesetzt, welcher zum einen als Abstandhalter für das Fassadenelement 1 zum untern Profil 71 als auch als Auflagepolster für dieses dient. Dazu hat er im Bereich des Längsschenkels des unteren Profils 71 seitlich abstehende Leisten 74, die an der Schmalseite des Fassadenelements 1 anliegen und es zwischen den Dachsparren 60 ausrichten. Als Auflagepolster dienen gummielastische Auflagen 72 auf der Oberseite des Querschenkels. Auf diesen gummielastischen Auflagen 72 liegen die abgewinkelten Randbereiche der Deckschicht 40 auf. Als Gegenlager 76 zu dem unteren Profil 71 ist auf der Oberseite der Frontplatte 31 ein Längsprofil 76 angeordnet, welches über ein Dichtprofil 75 an der Oberseite 2 der Frontplatte 31 anliegt. Über eine Schraube 78 können das untere Profil 71 und das Gegenlager 76 miteinander verspannt werden, wodurch das Fassadenelement 1 in seinem Randbereich eigeklemmt und damit fixiert wird. Nachdem die Schraube 78 angezogen wurde, wird ein nach unten offenes Kastenprofil 77 auf das Gegenlager 78 aufgesetzt und dichtet die Einspannvorrichtung 70 nach oben ab.

Zwischen den Dachsparren 60 können mehrere Fassadenelemente 1 als Dacheindeckung Stoß an Stoß in Reihe angeordnet werden. Die dabei entstehende Fuge kann durch ein adhäsives Dichtmittel, wie z.B. Silikon oder eine gummielastische Leiste geschlossen werden.

In grundsätzlich gleicher Weise können die Fassadenelemente auch an Pfosten-Riegel-Konstruktionen befestigt werden, die an die Stelle der gezeigten Dachsparren treten.

### Bezugszeichenliste

- 1: Fassadenelement / Fassadenmodul
- 2: Vorderseite
- 12: Abstandhalter/ Isolierstoffstütze
- 14: bevorzugt dauerelastische Masse zum Versiegeln
- 30: Photovoltaikmodul
- 31: Frontplatte
- 33: Rückplatte
- 34: Verteilerdose
- 40: Abdeckung / Deckschicht
- 42: Randbereich
- 50: Dämmung
- 55: Kabel zum Anschluss des Photovoltaikmoduls
- 70: Einspannvorrichtung
- 71: unteres Profil der Einspannvorrichtung
- 72: Auflage
- 73: Aufsatz
- 74: Leiste / Abstandhalter als Positionierhilfe
- 75: Dichtprofil
- 76: Gegenlager
- 77: Kastenprofil
- 78: Spannmittel, z.B. Schraube
- d₁: Dicke des verjüngten Randbereichs
- d₂: Dicke des mittleren Abschnitts des Fassadenelements

## Patentansprüche

1. Fassadenelement (1) mit wenigstens einem Photovoltaikmodul (30), das zumindest eine Frontplatte (31) und eine rückwärtige Trägerplatte (33) aufweist, wobei die Frontplatte (31) die Frontseite des Fassadenelementes bildet und auf der Rückseite der Trägerplatte (33) mindestens ein Abstandhalter (12) aufgesetzt ist, an dessen Rückseite eine Deckschicht (40) angeordnet ist,
**dadurch gekennzeichnet, dass**
der Raum zwischen der Trägerplatte (33) und der Deckschicht (40) mit wenigstens einem Dämmstoff (50) verfüllt ist.

2. Fassadenelement (1) nach Anspruch 1,
**dadurch gekennzeichnet, dass**
der wenigstens eine Abstandhalter (12) einen umlaufenden Rahmen bildet, der den Raum zwischen der Deckschicht (40) und der Trägerplatte (33) seitlich begrenzt.

3. Fassadenelement nach Anspruch 1 oder 2
**dadurch gekennzeichnet, dass**
der Abstandhalter (12) gegenüber dem Rand der Trägerplatte (33) und/oder der Deckschicht (40) zurückgesetzt ist, so dass die überstehenden Ränder eine Randfugen bilden, wobei die Randfuge mit einem Dichtmittel (14) verfüllt ist.

4. Fassadenelement (1) nach einem der Ansprüche 1 bis 3
**dadurch gekennzeichnet, dass**
der Dämmstoff (50) an der Rückseite der Trägerplatte (33) und/oder an der Deckschicht (40) zumindest abschnittsweise haftend anliegt.

5. Fassadenelement (1) nach einem der Ansprüche 1 bis 4,
**dadurch gekennzeichnet, dass**
wenigstens ein Anschlusskabel für das Photovoltaikmodul (30) durch wenigstens eine Ausnehmung an wenigstens einer Schmalseite des Fassadenelements aus diesem herausgeführt wird.

6. Fassadenelement (1) nach einem der Ansprüche 1 bis 5
**dadurch gekennzeichnet, dass**
in den Abstandhalter (12) wenigstens eine Anschlussdose für das Photovoltaikmodul integriert ist.

7. Fassadenelement (1) nach einem der Ansprüche 1 bis 6
**dadurch gekennzeichnet, dass**
das Fassadenelement (1) rahmenlos ist.

8. Fassadenelement (1) nach einem der Ansprüche 1 bis 7
**dadurch gekennzeichnet, dass**
die Dicke des Fassadenelements zumindest an zwei gegenüberliegenden Randbereichen des Fassadenelementes (1) gestuft verjüngt ist.

9. Fassadenelement (1) nach einem der Ansprüche 1 bis 8,
**dadurch gekennzeichnet, dass**
das Fassadenelement (1) an einer Wand eines Baukörpers befestigt ist.

10. Fassadenelement (1) nach einem der Ansprüche 1 bis 8,
**dadurch gekennzeichnet, dass**
das Fassadenelement (1) an einem Dach eines Baukörpers befestigt ist.

11. Fassadenelement (1) nach einem der Ansprüche 9 oder 10
**dadurch gekennzeichnet, dass**
das Fassadenelement (1) durch flächiges Einspannen wenigstens zwei gegenüberliegender Randbereiche der Frontplatte°(31) und der Deckschicht°(4) mit dem Baukörper verbunden ist.

12. Fassadenelement (1) nach einem der Ansprüche 9 bis 11,
**dadurch gekennzeichnet, dass**
ein Vorsprung der Deckschicht (40) in eine Ausnehmung des Baukörpers eingreift.

13. Fassadenelement (1) nach einem der Ansprüche 9 bis 12,
**dadurch gekennzeichnet, dass**
das Fassadenelement°(1) derart in eine Pfosten-Riegel-Konstruktion eingesetzt ist, dass seine Frontplatte°(31) bündig an einer Frontplatte eines ebenfalls in die Pfosten-Riegel-Konstruktion eingesetzten weiteren Fassadenelements anliegt.

## Claims

1. Facade element (1) with at least one photovoltaic module (30), comprising at least a front plate (31) and a rear support plate (33), wherein the front plate (31) forms the front side of the facade element, and at least one spacer (12) is placed on the rear side of the support plate (33), wherein on the backside of said spacer a cover layer (40) is arranged,
**characterized in that**
the space between the support plate (33) and the cover layer (40) is filled with at least one insulating material (50).

2. Facade element (1) according to claim 1,
**characterized in that**
the at least one spacer (12) forms a circumferential frame, which delimits the space between cover layer (40) and the support plate (33) laterally.

3. Facade element (1) according to claim 1 or 2,
**characterized in that**
the spacer (12) is retracted with respect to the edge of the support plate (33) and/or the cover layer (40), such that protruding edges form an edge joint, wherein the edge joint is filled with a sealant (14).

4. Facade element (1) according to one of claims 1 to 3,
**characterized in that**
the insulating material (50) abuts adhesively at least sectionwise at the rear side of the support plate (33) and/or at the cover layer (40).

5. Facade element (1) according to one of claims 1 to 4,
**characterized in that**
at least one connection cable for the photovoltaic module (30) is guided out of the facade element through at least one recess on at least one narrow side of the facade element.

6. Facade element (1) according to one of claims 1 to 5,
**characterized in that**
at least one socket for the photovoltaic module is integrated in the spacer (12).

7. Facade element (1) according to one of claims 1 to 6,
**characterized in that**
the facade element (1) is frameless.

8. Facade element (1) according to one of claims 1 to 7,
**characterized in that**
the thickness of the facade element is tapered in a stepped manner at least at two opposite edge regions of the facade element (1).

9. Facade element (1) according to one of claims 1 to 8,
**characterized in that**
the facade element (1) is mounted to a wall of a building structure.

10. Facade element (1) according to one of claims 1 to 8,
**characterized in that**
the facade element (1) is mounted to a roof of a building structure.

11. Facade element (1) according to one of claims 9 or 10,
**characterized in that**
the facade element (1) is connected to the building structure by flat clamping of at least two opposite edge regions of the front plate (31) and the cover layer (4).

12. Facade element (1) according to one of claims 9 to 11,
**characterized in that**
a protrusion of the cover layer (40) engages in a recess of the building structure.

13. Facade element (1) according to one of claims 9 to 12,
**characterized in that**
the facade element (1) is inserted in a post-and-crossbeam-construction, such that its front plate (31) is flush with a front plate of a further face element that is likewise inserted the post-and-crossbeam-construction.

## Revendications

1. Élément de façade (1) avec au moins un module photovoltaïque (30) qui présente au moins un panneau avant (31) et un panneau de support (33) arrière, le panneau avant (31) formant la face avant de l'élément de façade et le panneau de support (33) comportant sur sa face arrière au moins un élément d'écartement (12) dont la face arrière porte une couche de couverture (40), **caractérisé en ce que** l'espace entre le panneau de support (33) et la couche de couverture (40) est rempli d'au moins un matériau isolant (50).

2. Élément de façade (1) selon la revendication 1, **caractérisé en ce que** l'au moins un élément d'écartement (12) forme un cadre continu qui délimite latéralement l'espace entre la couche de couverture (40) et le panneau de support (33).

3. Élément de façade selon la revendication 1 ou 2, **caractérisé en ce que** l'élément d'écartement (12) est en retrait par rapport au bord du panneau de support (33) et/ou de la couche de couverture (40), de sorte que les bords qui dépassent forment un joint de bord, lequel joint de bord est rempli avec un produit d'étanchéité (14).

4. Élément de façade (1) selon l'une des revendications 1 à 3, **caractérisé en ce que** le matériau isolant (50) repose par adhérence au moins par zones sur la face arrière du panneau de support (33) et/ou sur la couche de couverture (40).

5. Élément de façade (1) selon l'une des revendications 1 à 4, **caractérisé en ce qu'**au moins un câble de raccordement pour le module photovoltaïque (30) est amené hors de l'élément de façade à travers au moins un évidement sur au moins un petit côté de celui-ci.

6. Élément de façade (1) selon l'une des revendications 1 à 5, **caractérisé en ce qu'**au moins une prise de raccordement pour le module photovoltaïque est intégrée dans l'élément d'écartement (12).

7. Élément de façade (1) selon l'une des revendications 1 à 6, **caractérisé en ce que** l'élément de façade (1) ne comporte pas de cadre.

8. Élément de façade (1) selon l'une des revendications 1 à 7, **caractérisé en ce que** l'épaisseur de l'élément de façade diminue par gradins au moins dans deux zones de bord de l'élément de façade (1).

9. Élément de façade (1) selon l'une des revendications 1 à 8, **caractérisé en ce que** l'élément de façade (1) est fixé sur un mur d'un corps de bâtiment.

10. Élément de façade (1) selon l'une des revendications 1 à 8, **caractérisé en ce que** l'élément de façade (1) est fixé sur un toit d'un corps de bâtiment.

11. Élément de façade (1) selon l'une des revendications 9 ou 10, **caractérisé en ce que** l'élément de façade (1) est relié au corps de bâtiment par serrage à plat d'au moins deux zones de bord du panneau avant (31) et de la couche de couverture (4), qui se faisant face.

12. Élément de façade (1) selon l'une des revendications 9 à 11, **caractérisé en ce qu'**une saillie de la couche de couverture (40) se met en prise dans un évidement du corps de bâtiment.

13. Élément de façade (1) selon l'une des revendications 9 à 12, **caractérisé en ce que** l'élément de façade (1) est inséré dans une construction en poteaux et traverses de telle manière que son panneau avant (31) repose de niveau contre un panneau avant d'un autre élément de façade également inséré dans la construction en poteaux et traverses.
